# EUROPEAN PATENT SPECIFICATION

(11) **EP 4 007 370 B1**
(45) Date of publication and mention of the grant of the patent: **30.10.2024**
(21) Application number: 19947606.0
(22) Date of filing: 30.09.2019
(51) Int. Cl.: H04W 36/08, H04W 36/02, H04W 36/18

(54) **WIRELESS COMMUNICATION METHOD AND APPARATUS, AND NETWORK DEVICE**
DRAHTLOSKOMMUNIKATIONSVERFAHREN UND -VORRICHTUNG UND NETZWERKVORRICHTUNG
PROCÉDÉ ET APPAREIL DE COMMUNICATION SANS FIL, ET DISPOSITIF DE RÉSEAU

(43) Date of publication of application: 01.06.2022
(73) Proprietor: GUANGDONG OPPO MOBILE TELECOMMUNICATIONS CORP., LTD., Dongguan, Guangdong 523860 (CN)
(72) Inventor: LU, Qianxi, Dongguan, Guangdong 523860 (CN); YOU, Xin, Dongguan, Guangdong 523860 (CN)
(74) Representative: Taor, Simon Edward William
(86) International application number: PCT/CN2019/109676
(87) International publication number: WO 2021/062756

(56) References cited:
- CN-A- 102 802 208
- CN-A- 109 151 918
- US-A1- 2009 034 476
- US-A1- 2019 116 536
- ERICSSON: "Enhancements to Make-Before-Break", vol. RAN WG2, no. Athens, Greece; 20190225 - 20190301, 15 February 2019 (2019-02-15), XP051602449, Retrieved from the Internet <URL:http://www.3gpp.org/ftp/tsg%5Fran/WG2%5FRL2/TSGR2%5F105/Docs/R2%2D1901085%2Ezip> [retrieved on 20190215]
- MEDIATEK INC: "Data Forwarding to Minimize User Data Interruption during HO", vol. RAN WG2, no. Reno, USA; 20190513 - 20190517, 13 May 2019 (2019-05-13), XP051729386, Retrieved from the Internet <URL:http://www.3gpp.org/ftp/Meetings%5F3GPP%5FSYNC/RAN2/Docs/R2%2D1905893%2Ezip> [retrieved on 20190513]
- NEC: "DL PDCP SN handling for DAPS", vol. RAN WG2, no. Prague, Czech Republic; 20190826 - 20190830, 16 August 2019 (2019-08-16), XP051767456, Retrieved from the Internet <URL:http://www.3gpp.org/ftp/tsg_ran/WG2_RL2/TSGR2_107/Docs/R2-1909661.zip> [retrieved on 20190816]
- INTEL CORPORATION: "Running CR for the introduction of NR mobility enhancement", 3GPP DRAFT; R2-1911559 RUNNING STAGE 2 CR V03, vol. RAN WG2, 13 September 2019 (2019-09-13), Prague, Czech Republic, pages 1 - 18, XP051782943

## Description

### TECHNICAL FIELD

The embodiments of the present application relate to the field of communication technologies, and in particular, to a wireless communication method, apparatus, and network device.

### BACKGROUND

At present, in order to reduce the time delay in handover process of the base station, research on enhanced base station handover is currently underway. In the enhanced base station handover process, the terminal device can maintain the connection with the source base station and the target base station at the same time, and will not release the connection with the source base station until the handover process is completed.

However, during the enhanced handover process, since the source base station and the target base station are connected to the terminal device at the same time, the source base station can still send the data packet associated with Sequence Number (SN) to the target base station. In this case, the source base station cannot determine the SN value of the first one data packet received by the target base station that is not associated with SN.
ERICSSON: "Enhancements to Make-Before-Break", 3GPP DRAFT; R2-1901085 discloses key steps to support 0ms HO interruption time by means of enhanced MBB procedure.
MEDIATEK INC: "Data Forwarding to Minimize User Data Interruption during HO", 3GPP DRAFT; R2-1905893 discusses Basic HO and Rel-14 MBB HO.
NEC: "DL PDCP SN handling for DAPS", 3GPP DRAFT; R2-1909661 discusses PDCP SN handling when source eNB is released.

### SUMMARY

The embodiments of the present application provide a wireless communication method, apparatus, and network device, so that a target base station can determine SN of a received data packet that is not associated with SN.

The invention is defined by the independent claims. The dependent claims specify the preferred embodiments of the invention. The following aspects disclosed in the SUMMARY section are not according to the invention and are provided for illustrative purposes to support a better understanding of the invention.

In an aspect, a chip is provided for implementing the method in the first aspect or the second aspect or each implementation manner thereof.

Specifically, the chip includes: a processor, configured to call and run a computer program from a memory, so that a device installed with the chip executes the method in the first aspect or the second aspect or each implementation manner thereof.

In an aspect, a computer-readable storage medium is provided for storing a computer program that enables a computer to execute the method in the first aspect or the second aspect or each implementation manner thereof.

In an aspect, a computer program product is provided, which includes computer program instructions that cause a computer to execute the method in the first aspect or the second aspect or each implementation manner thereof.

In an aspect, a computer program is provided, which when running on a computer, causes the computer to execute the method in the first aspect or the second aspect or each implementation manner thereof.

In the wireless communication method provided by the embodiments of the present application, in the case of a cell handover of a terminal device, the source cell may send second information to the target cell, so that the target cell can determine the second PDCP SN of the second data packet received by the target cell according to the second information.

### BRIEF DESCRIPTION OF THE DRAWINGS

In the following, embodiments of the invention are described with particular reference to figures 3, 4, and 8. The other embodiments, aspects and/or examples of the disclosure are provided for illustrative purposes to support a better understanding of the invention.
FIG. 1 is a schematic diagram of a communication system architecture provided by an embodiment of the present application;
FIG. 2 is a handover flowchart provided by an embodiment of the present application;
FIG. 3 is a schematic flowchart of a wireless communication method provided by an embodiment of the present application;
FIG. 4 is a schematic flowchart of a wireless communication method according to another embodiment of the present application;
FIG. 5 is a schematic block diagram of a wireless communication apparatus provided by an embodiment of the present application;
FIG. 6 is a schematic block diagram of a wireless communication apparatus according to another embodiment of the present application;
FIG. 7 is a schematic block diagram of a network device according to an embodiment of the present application;
FIG. 8 is a schematic block diagram of a communication device provided by an embodiment of the present application; and
FIG. 9 is a schematic block diagram of a chip provided by an embodiment of the present application.

### DETAILED DESCRIPTION

The technical solutions in the embodiments of the present application will be described below in conjunction with the drawings in the embodiments of the present application. Obviously, the described embodiments are a part of the embodiments of the present application, rather than all of the embodiments. Based on the embodiments in the present application, all other embodiments obtained by those of ordinary skill in the art without creative work shall fall within the protection scope of the present application.

The technical solutions of the embodiments of the present application may be applied to various communication systems, such as: Global System of Mobile communication (GSM) system, Code Division Multiple Access (CDMA) system, Wideband Code Division Multiple Access (WCDMA) system, General Packet Radio Service (GPRS), Long Term Evolution (LTE) system, LTE Frequency Division Duplex (FDD) system, LTE Time Division Duplex (TDD), Universal Mobile Telecommunication System (UMTS), Worldwide Interoperability for Microwave Access (WiMAX) communication system or 5G system, etc.

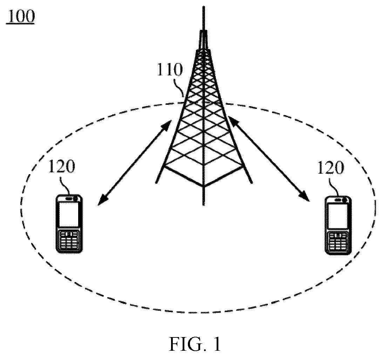

Exemplarily, the communication system 100 applied in the embodiments of the present application is shown in FIG. 1. The communication system 100 may include a network device 110, and the network device 110 may be a device that communicates with a terminal device 120 (or called a communication terminal or a terminal). The network device 110 may provide a communication coverage for a specific geographic area, and may communicate with the terminal device(s) located in the coverage area. Optionally, the network device 110 may be a Base Transceiver Station (BTS) in a GSM system or a CDMA system, a NodeB (NB) in a WCDMA system, or an Evolutional Node B (eNB or eNodeB) in an LTE system, or a wireless controller in a Cloud Radio Access Network (CRAN), or the network device may be a mobile switching center, a relay station, an access point, a vehicle-mounted device, a wearable device, a hub, a switch, a bridge, a router, a network side device in 5G networks, or a network device in the future evolution of the Public Land Mobile Network (PLMN), etc.

Generally speaking, traditional communication systems support a limited number of connections and the implementation is easy. However, with the development of communication technology, the mobile communication systems will not only support traditional communications, but will also support, for example, Device to Device (D2D) communication, Machine to Machine (M2M) communication, Machine Type Communication (MTC), and Vehicle to Vehicle (V2V) communication, etc. The embodiments of the present application may also be applied to these communication systems.

Optionally, the communication system in the embodiments of the present application may be applied to a Carrier Aggregation (CA) scenario, may also be applied to a Dual Connectivity (DC) scenario, and may also be applied to a Standalone (SA) network deployment scenario.

Exemplarily, the communication system 100 applied in the embodiments of the present application is shown in FIG. 1. The communication system 100 may include a network device 110, and the network device 110 may be a device that communicates with a terminal device 120 (or called a communication terminal or a terminal). The network device 110 may provide a communication coverage for a specific geographic area, and may communicate with the terminal device(s) located in the coverage area. Optionally, the network device 110 may be a Base Transceiver Station (BTS) in a GSM system or a CDMA system, or may be a NodeB (NB) in a WCDMA system, or may be an Evolutional Node B (eNB or eNodeB) in an LTE system, or may be a wireless controller in a Cloud Radio Access Network (CRAN), or the network device may be a mobile switching center, a relay station, an access point, a vehicle-mounted device, a wearable device, a hub, a switch, a bridge, a router, a network side device in 5G networks, or a network device in the future evolution of Public Land Mobile Network (PLMN), etc.

The communication system 100 also includes at least one terminal device 120 located within the coverage area of the network device 110. As used herein, the "terminal device" includes, but is not limited to, connection via wired lines, such as connection via Public Switched Telephone Networks (PSTN), Digital Subscriber Line (DSL), digital cables, and direct cables; and/or another data connection/network; and/or via a wireless interface, such as for cellular networks, Wireless Local Area Networks (WLAN), digital TV networks such as DVB-H networks, satellite networks, AM-FM broadcast transmitter; and/or an apparatus of another terminal device that is set to receive/send communication signals; and/or Internet of Things (IoT) device. The terminal device set to communicate through a wireless interface may be referred to as a "wireless communication terminal", a "wireless terminal" or a "mobile terminal". Examples of the mobile terminals include, but are not limited to, satellite or cellular phones; Personal Communications System (PCS) terminals that can combine cellular radio phones with data processing, fax, and data communication capabilities; may include radio phones, pagers, Internet/intranet access, Web browser, memo pad, calendar, and/or PDA of Global Positioning System (GPS) receiver; and conventional laptop and/or palmtop receivers or other electronic apparatuses including radio telephone transceivers. The terminal device may refer to an access terminal, user equipment (UE), a user unit, a user station, a mobile station, a mobile, a remote station, a remote terminal, a mobile device, a user terminal, a terminal, a wireless communication device, a user agent, or a user apparatus. The access terminal may be a cellular phone, a cordless phone, a Session Initiation Protocol (SIP) phone, a Wireless Local Loop (WLL) station, a Personal Digital Assistant (PDA), and a handheld device with wireless communication function, a computing device or other processing devices connected to a wireless modem, an in-vehicle device, a wearable device, a terminal device in 5G networks, or a terminal device in the future evolution of PLMN, etc.

Optionally, Device to Device (D2D) communication may be performed between the terminal devices 120.

Optionally, the 5G system or 5G network may also be referred to as a New Radio (NR) system or a NR network.

FIG. 1 exemplarily shows one network device and two terminal devices. Optionally, the communication system 100 may include a plurality of network devices and the coverage of each network device may include other numbers of terminal devices, which is not limited in the embodiments of the present application.

Optionally, the communication system 100 may also include other network entities such as a network controller and a mobility management entity, which is not limited in the embodiments of the present application.

It should be understood that a device with a communication function in the network/system in the embodiments of the present application may be referred to as a communication device. Taking the communication system 100 shown in FIG. 1 as an example, the communication device may include a network device 110 and a terminal device 120 with a communication function. The network device 110 and the terminal device 120 may be the specific devices described above, which will not be repeated here. The communication device may also include other devices in the communication system 100, such as the network controller, the mobility management entity, and other network entities, which are not limited in the embodiments of the present application.

It should be understood that the terms "system" and "network" in the present disclosure are often used interchangeably in the present disclosure. The term "and/or" in the present disclosure only describes an association relationship between the associated objects, which means that there may be three kinds of relationships. For example, A and/or B may mean the following three situations: A exists alone, A and B exist at the same time, B exists alone. In addition, the character "/" in the present disclosure generally indicates that the associated objects in the context are in an "or" relationship.

The following is a brief introduction to the development of 5G and possible application scenarios.

At present, with people's pursuit of speed, delay, high-speed mobility, and energy efficiency, and due to the diversity and complexity of services in future life, the 3rd Generation Partnership Project (3GPP) International Standards Organization has begun research and development of 5G. The main application scenarios of 5G may include: enhanced Mobile Broadband (eMBB), Ultra Reliable and Low Latency Communication (URLLC), and massive Machine Type Communication (mMTC). The purpose of eMBB is still for the users to obtain multimedia content, services and data, and its demand is growing very rapidly. On the other hand, since eMBB may be deployed in different scenarios, such as indoors, urban areas, rural areas, etc., its capabilities and requirements are also quite different and cannot be generalized, but can be analyzed in detail in conjunction with specific deployment scenarios. Typical applications of URLLC may include: industrial automation, power automation, telemedicine operations (surgery), traffic safety protection, etc. The typical characteristics of mMTC may include: high connection density, small data volume, delay-insensitive services, low cost and long service life of the module, etc.

In a 5G system, NR may also be deployed independently. The RRC state in the 5G network environment may include RRC idle (RRC_IDLE) state, RRC connected (RRC_CONNECTED) state, and RRC inactive (RRC INACTIVE state). Among them, the RRC in the RRC_IDLE state has not established a connection; and the RRC in the RRC_CONNECTED state has established a connection. The following briefly introduces the different states of RRC respectively.
- RRC _IDLE: Mobility is UE-based cell selection and reselection, paging is initiated by the Core Network (CN), and the paging area is configured by the CN. There is no UE Access Stratum (UE AS) context on the base station side. There is no RRC connection.
- RRC_CONNECTED: There is an RRC connection, and there is a UE AS context between the base station and the UE. The network side knows that the location of the UE is of a specific cell level. Mobility is a mobility controlled by the network side. Unicast data may be transmitted between the UE and the base station.
- RRC_INACTIVE: Mobility is UE-based cell selection and reselection, there is a Core Network-New Radio (CN-NR) connection, the UE AS context is stored on a certain base station, the paging is triggered by a Radio Access Network (RAN), the paging area based on RAN is managed by the RAN, and the network side knows that the location of the UE is based on the paging area level of the RAN.

Similar to the LTE system, the NR system may support the handover process of the terminal device in the connected state. For example, when the user who is using network services moves from one cell to another, or due to wireless transmission traffic adjustment, activation operation maintenance, device failure, etc., in order to ensure the continuity of communication and the quality of service, the system may transfer the communication link between the user and the original cell to a new cell, that is, perform a handover process.

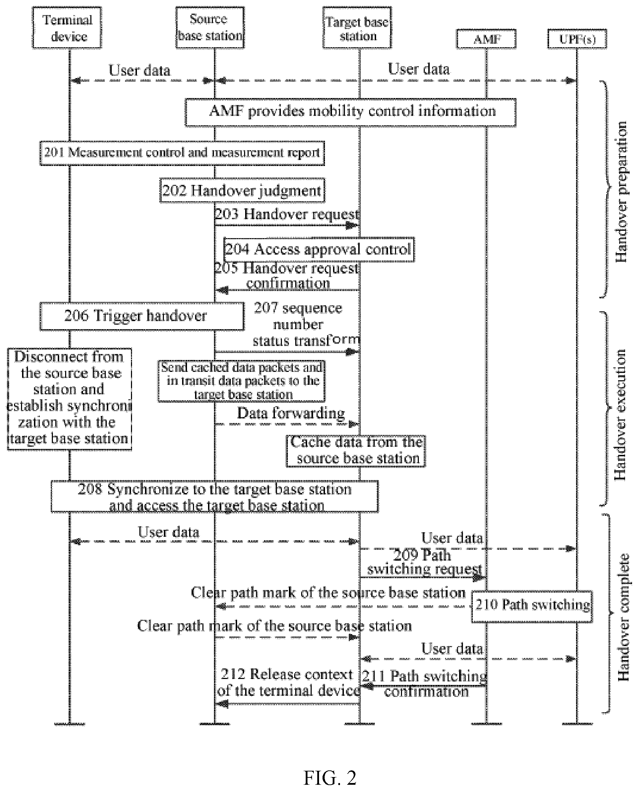

Taking the Xn interface handover process as an example, the entire handover process may be divided into three stages. The entire handover process will be described below in conjunction with FIG. 2.

### First stage: handover preparation (201-205)

In 201, the source base station triggers the terminal device to perform neighboring cell measurement, so that the terminal device may measure the neighboring cell and report the measurement result to the source base station.

In 202, the source base station evaluates the measurement result reported by the terminal device and decides whether to trigger a handover.

In 203, if the source base station decides to trigger a handover, it may send a handover request to the target base station.

In 204, after receiving the handover request sent by the source base station, the target base station may start to permit access according to the service information carried by the source base station, and perform radio resource configuration.

In 205, the target base station sends a handover request confirmation message to the source base station, and returns the access permission result and the radio resource configuration information in the target base station to the source base station. At this point, the handover preparation stage is complete.

### Second stage: handover execution (206-208)

In 206, after the source base station receives the handover request confirmation message of the target base station, it may trigger the terminal device to perform handover.

In 207, the source base station may forward the buffered data, the data packet in transit, the system sequence number of the data, etc., to the target base station. And, the target base station may buffer the data received from the source base station.

In addition, the terminal device may disconnect from the source base station and establish synchronization with the target base station.

In 208, the terminal device synchronizes to the target base station. At this point, the handover execution stage is complete.

### Third stage: handover completion (209-212)

In 209, the target base station sends a path switching request to an Access and Mobility Management Function (AMF).

In 210, after receiving the path switching request of the target base station, the AMF performs path switching with the User Plane Function (UPF) to clear a path mark of a user plane of the source base station.

In 211, after the path switching is completed, the AMF may send a path switching confirmation message to the target base station.

In 212, the target base station sends a terminal device context release message to the source base station, notifies the source base station that the handover is successful, and triggers the source base station to release the terminal device context. At this point, the handover is complete.

In order to further reduce the time delay in the base station handover process, research on enhanced base station handover is currently underway. During the enhanced base station handover process, the UE may maintain a connection with the source base station and the target base station at the same time, and will not release the connection with the source base station until the handover process is completed. Compared with the handover process introduced in FIG. 2, this handover process further reduces the interruption time during the handover process and improves the robustness of the handover process.

However, since in the enhanced handover process, the source base station and the target base station are connected to the terminal device at the same time, the source base station may send a Hyper Frame Number (HFN) and a Packet Data Convergence Protocol Sequence Number (PDCP SN) to the target base station through Status Transform (ST) information. However, since the terminal device remains connected to the source base station and the target base station at the same time, the source base station can still send the data packet associated with the SN to the target base station. In this case, the source base station cannot determine the SN value of the first one data packet received by the target base station that is unassociated with the SN.

Therefore, the embodiments of the present application provide the following solutions to enable the target base station to determine the SN value of the first received data packet that is not associated with the SN.

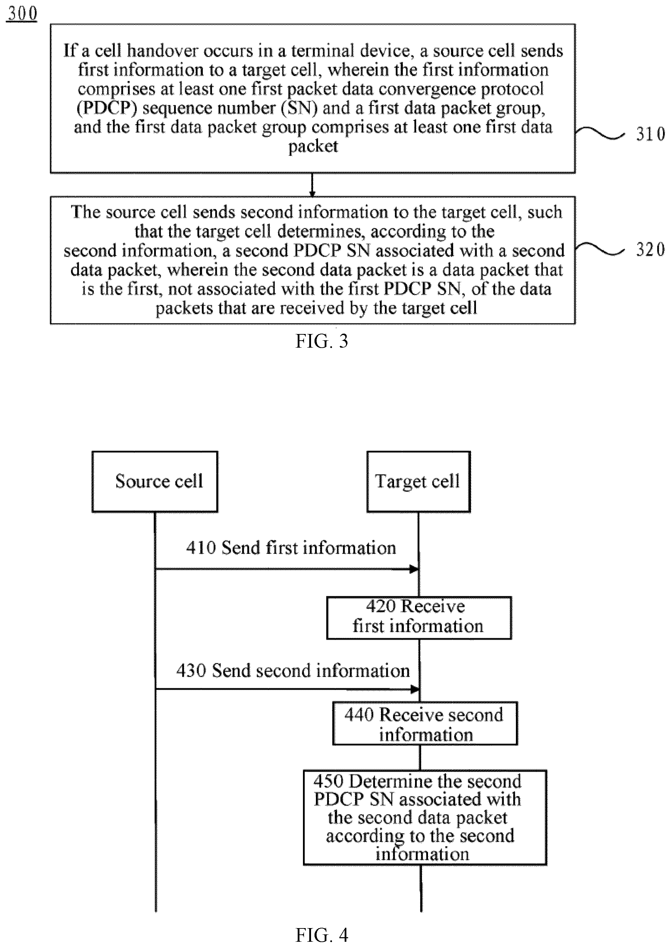

The solution provided in the implementation of the present application will be described in detail below in conjunction with FIG. 3.

As shown in FIG. 3, which illustrates a schematic flowchart of a wireless communication method 300 provided according to an embodiment of the present application, the method 300 may include steps 310-320.

In 310, if a cell handover occurs in the terminal device, the source cell sends first information to the target cell, where the first information includes at least one first PDCP SN and a first data packet group, and the first data packet group includes at least one first data packet.

In the embodiment of the present application, the first data packet group may include at least one first data packet, and the at least one first data packet may correspond to SN in the at least one first PDCP SN one by one, or a part of the data packets in the at least one first data packet may correspond to SN in the at least one first PDCP SN one by one.

For example, in an embodiment, assuming that there are 100 data packets in the first data packet group, and the SNs included in at least one first PDCP SN are 1-100, then these 100 data packets in the first data packet group may be associated with the SNs of SN 1-100 in the first PDCP SN, that is, data packet 1 is associated with SN=1, data packet 2 is associated with SN=2, data packet 3 is associated with SN=3, ... and data packet 100 is associated with SN=100.

In another embodiment, assuming that there are 100 data packets in the first data packet group, and the SNs included in at least one first PDCP SN are 1-50, then 50 data packets in the first data packet group may be associated with the SNs of SN 1-50 in the first PDCP SN, that is, data packet 1 is associated with SN=1, data packet 2 is associated with SN=2, data packet 3 is associated with SN=3, ... data packet 50 is associated with SN=50. For the remaining data packets that are not associated with the SN, the source cell may also send these data packets to the target cell, and these data packets are numbered by the target cell, and sent to the terminal device.

The association manner in the embodiment of the present application may be embodied by the first data packet group. For example, the first data packet group may be a General Packet Radio Service-Tunnelling Protocol (GTP) data packet group, and the GTP data packet group may include relevant SN.

The source cell and the target cell in the embodiment of the present application may be the source base station and the target base station mentioned above.

In 320, the source cell sends second information to the target cell, so that the target cell determines a second PDCP SN associated with a second data packet according to the second information, where the second data packet is a first received data packet by the target cell that is not associated with the first PDCP SN.

In the embodiment of the present application, the second data packet is the first one data packet received by the target cell that is not associated with the first PDCP SN. For the non-first one data packet not associated with the first PDCP SN received by the target cell, other data packets not associated with the first PDCP SN may be numbered with SNs according to the determined second PDCP SN.

For example, assuming that the target cell determines that the second PDCP SN associated with the second data packet is 101, then the SNs of other data packets received by the target cell that are not associated with the SNs may be 102, 103, 104, ..., etc., and the SNs are numbered for the data packets in turn.

In the wireless communication method provided by the embodiments of the present application, in the case that a cell handover occurs in a terminal device, the source cell sends second information to the target cell, so that the target cell may determine the second PDCP SN of the second data packet received by the target cell according to the second information.

The first information further includes: at least one first hyper frame number (HFN), and the at least one first HFN is used to encrypt and protect the integrity of the at least one first data packet.

In the embodiment of the present application, the first information also includes at least one first HFN. After the target cell receives the first HFN, combined with the received second PDCP SN, the received data packet can be encrypted and integrity protected.

In the wireless communication method provided by the embodiments of the present application, since the first information also includes the first HFN, combined with the second PDCP SN received by the target cell, the target cell can encrypt and protect integrity of the received second data packet, further, the target cell may send the encrypted and integrity-protected second data packet to the terminal device.

The first information and the second information are sent at different time points.

In the embodiment of the present application, the second information may be sent after the source cell sends the first information to the target cell. For example, after the source cell sends the first information to the target cell, the second information may be sent to the target cell, thus the information may indicate to the target cell the SN value of the first received data packet that is not associated with SN.

In the related art, in the enhanced handover process, since the terminal device can maintain the connection with the source cell and the target cell at the same time, the source cell can continue to send data packets associated with the SNs to the target cell. Therefore, the second information cannot be sent along with the first information.

Optionally, in some embodiments, the source cell sends second information to the target cell, so that the target cell determines the second PDCP SN associated with the second data packet according to the second information, including: in the case that the terminal device is not disconnected from the source cell, the source cell sending the second information to the target cell, so that the target cell determines the second PDCP SN associated with the second data packet according to the second information.

In the embodiment of the present application, the second information may be sent when the terminal device is not disconnected from the source cell. For example, after the source cell sends the first information to the target cell, since the terminal device remains connected to the source cell and the target cell at the same time, the source cell can continue to send the second information to the target cell so that the target cell can perform SN numbering on the first received data packet that is not associated with SN.

In the conventional handover process, the terminal device firstly disconnects from the source cell, and then connects to the target cell. After the terminal device is disconnected from the source cell, the target cell can start SN numbering the received data packets that are not associated with the SN.

Optionally, in some embodiments, the second information includes one of the following information: indication signaling, a maximum PDCP SN in the data packet associated with the first PDCP SN in the first data packet group, and identification information.

The indication signaling in the implementation of the present application may include a specific SN value, so that the target cell may determine the second PDCP SN associated with the second data packet according to the SN value.

It is pointed out above that the second information may be indication signaling. The following will specifically introduce how the target cell determines the second PDCP SN associated with the second data packet when the second information is the indication signaling.

Optionally, in some embodiments, when the second information is the indication signaling, the source cell sends the second information to the target cell, so that the target cell determines the second PDCP SN associated with the second data packet according to the second information, including: the source cell sending the indication signaling to the target cell, where the indication signaling includes an indication value so that the target cell determines the indication value to be the second PDCP SN associated with the second data packet.

In the embodiment of the present application, if the source cell finishes sending the data packet associated with the first PDCP SN to the target cell, it may send an indication signaling including an indication value to the target cell. After the target cell receives the indication signaling, it may determine the indication value as the second PDCP SN associated with the second data packet, that is, the target cell associates the indication value included in the indication signaling with the first received data packet that is not associated with the first PDCP SN. Thus, the target cell can determine the SN of the received data packet that is not associated with the SN, and further, the target cell can perform encryption and integrity protection on the received data packet.

Optionally, in some embodiments, the indication value is a sum of a PDCP SN of a data packet in the first data packet group that is previous to the first one data packet not associated with SN in the at least one first PDCP SN and a preset value.

In the embodiment of the present application, assuming that there are 100 data packets in the first data packet group, and the SNs of at least one first PDCP SN are 1-50, then the 50 data packets in the first data packet group may be associated with SNs of 1-50 in the at least one first PDCP SN. That is, data packet 1 is associated with SN=1, data packet 2 is associated with SN=2, data packet 3 is associated with SN=3, ..., and data packet 50 is associated with SN=50. After the source cell sends the data packets associated with SN=1-50 to the target cell, it may send an indication signaling including an indication value to the target cell. For example, if the preset value is 1, then the indication value may be 51. In this case, after the target cell receives the indication signaling with the indication value of 51, it may associate the indication value 51 with the first one data packet received by the target cell that is not associated with PDCP SN, so that the target cell may send the associated data packet to the terminal device.

In order to better understand the solution of the present application, a detailed introduction will be given below in conjunction with FIG. 4.

As shown in FIG. 4, a schematic flowchart of a wireless communication method 400 according to an embodiment of the present application is shown. The method 400 may include steps 410-450.

In 410, if a cell handover occurs in a terminal device, the source cell sends first information to the target cell, where the first information includes at least one first PDCP SN and a first data packet group, and the first data packet group includes at least one first data packet.

The first information further includes: at least one first hyper frame number (HFN), and the at least one first HFN is used to encrypt and protect integration of the at least one first data packet.

In 420, the target cell receives the first information.

In 430, the source cell sends second information to the target cell.

In 440, the target cell receives the second information.

In 450, the target cell determines second PDCP SN associated with a second data packet according to the second information, where the second data packet is the first one data packet received by the target cell that is not associated with the first PDCP SN.

As pointed out above, when a cell handover occurs in a terminal device, it may include three stages: handover preparation, handover execution, and handover completion. Among them, in the handover execution stage, the source cell may forward the buffered data, the transmitting data packet, and the sequence number of the data packet to the target cell.

In the embodiment of the present application, at the beginning of data forwarding, the source cell may send at least one first HFN to the target cell, and at the same time, it may also forward at least one first PDCP SN and the first data packet group to the target cell.

After the target cell receives the at least one first HFN and the at least one first PDCP SN sent by the source cell, the target cell may use the at least one first HFN and the at least one first PDCP SN to perform PDCP encryption and integrity protection.

For example, if the length of the first HFN is 8 bits, it means that the maximum sequence number transmitted by the first HFN is 255. In the case that the first HFN is 0, when the value of the first PDCP SN increases from 255 by 1, the first PDCP SN returns to zero, the first HFN also increases by 1 and becomes 1.

Similarly, in the case that the first HFN is 1, when the value of the first PDCP SN increases from 255 by 1, the first PDCP SN returns to zero, and the first HFN also increases by 1 and becomes 2.

After receiving the at least one first HFN and at least one PDCP SN, the target cell may encrypt and protect integrity of the received data packet through the at least one first HFN and at least one PDCP SN. For example, if the largest HFN in the first HFN received by the target cell is 3 and the largest SN in the first PDCP SN in the largest HFN is 1, the counter (COUNT) is equal to 769 (3*256+1). In this way, the target cell and the source cell may have the same COUNT value, so that encryption and integrity protection can be completed.

At the end of data forwarding, the source cell may send the indication value to the target cell through the indication signaling. The indication value may be determined based on the first PDCP SN of the first data packet associated with at least one first PDCP SN that the source cell has sent to the target cell.

For example, assuming that the SNs of the first data packets associated with at least one first PDCP SN sent by the source cell to the target cell is 1-100, and the number of data packets not associated with the PDCP SN is 50, in the embodiment of the present application, the source cell may send the first data packet group with the associated SNs of 1-100 to the target cell, and at the same time, may also send the 50 data packets in the first data packet group that are not associated with at least one first PDCP SN to the target cell. In addition, the source cell may send indication signaling to the target cell, and the indication signaling may be used to instruct the target cell to start SN numbering of the 50 data packets that are not associated with at least one first PDCP SN. For example, the indication signaling may instruct the target cell to start SN numbering from 101 to the 50 of data packets that are not associated with the PDCP SN.

In the embodiment of the present application, if the data packets associated with SNs in the at least one first PDCP SN sent by the source cell to the target cell are not continuous, the target cell may also indicate the SN value of the data packet that is not associated with SN received by the target cell through the indication signaling..

For example, the source cell sends data packets with associated SNs of 1, 2, 4, 8, 9, 20 to the target cell. Since the SNs of the data packets associated with the SNs sent by the source cell to the target cell are not continuous, and the SN value of the data packet associated with the SN previous to the first one data packet not associated with the SN is 20, the indicator value of 21 included in the indicator signaling may be sent to the target cell, and after receiving the data packet sent by the source cell, the target cell may use the indicator value as the SN of the first one data packet received by the target cell that is not associated with SN, that is, the target cell may sequentially number SNs of the received data packets not associated with SN starting from 21.

Optionally, in some embodiments, the method further includes: in the case that the first data packet group sent by the source cell to the target cell is not lost, the source cell not sending a second HFN to the target cell.

Optionally, in some embodiments, the method further includes: in the case that the first data packet group sent by the source cell to the target cell is lost, the source cell sending the second HFN to the target cell.

In the embodiment of the present application, if some data packets in the first data packet group sent by the source cell to the target cell are missing, a second HFN may be sent to the target cell, and the second HFN may indicate the HFN value corresponding to the SN associated with the current data packet.

If the first HFN sent by the source cell to the target cell is continuous, after the target cell receives the first HFN and the first PDCP SN, the first data packet group may be encrypted and integrity protected according to the received information; and if the first HFN sent by the source cell to the target cell is not continuous, after the target cell receives the first PDCP SN, the HFN to which the data packet belongs is not clear, which may result in the inability to encrypt and protect the integrity of the data packet.

For example, assuming that the length of the first HFN is 8 bits, if the source cell sends to the target cell at least one first HFN including 0, 1, 2, when the first HFN is 0, at least one first PDCP SN may include 0-255; when the first HFN is 1, at least one first PDCP SN may include 0-255; and when the first HFN is 2, at least one first PDCP SN may include 0-100. The target cell may perform encryption and integrity protection according to the first HFN of 2 and the first PDCP SNof 100.

If the source cell does not send at least one first HFN to the target cell, and only sends the first PDCP SN of 100, in the case that the data packet in the first data packet group is lost, the target cell does not know whether the first HFN corresponding to the data packet with SN=100 is 1 or 2, and cannot encrypt and protect integrity of the data packet. Therefore, in the case that the first data packet group sent by the source cell to the target cell is lost, the source cell may send the second HFN to the target cell to inform the target cell of the HFN corresponding to the data packet.

As pointed out above, the second information may be indication signaling, the largest PDCP SN in the data packet associated with the first PDCP SN in the first data packet group, and identification information. It is described above that the target cell may determine the SN of the first received data packet that is not associated with the first PDCP SN according to the indication value in the indication signaling sent by the source cell. The following will introduce that the target cell determines the SN of the first received data packet that is not associated with the first PDCP SN according to the largest PDCP SN in the data packet associated with the first PDCP SN in the first data packet group.

Optionally, in some embodiments, in the case that the second information is the largest PDCP SN among the data packets associated with the first PDCP SN in the first data packet group, the source cell sends second information to the target cell so that the target cell determines the second PDCP SN associated with the second data packet according to the second information, including: the source cell sending to the target cell the maximum PDCP SN in the data packet associated with the first PDCP SN in the first data packet group, so that the target cell determines the sum of the maximum PDCP SN and the preset value as the second PDCP SN associated with the second data packet.

In the embodiment of the present application, assuming that there are 100 data packets in the first data packet group, and the SNs included in at least one first PDCP SN are 1-100, then 100 data packets in the first data packet group may be all associated with SNs of 1-100 in at least one first PDCP SN, that is, data packet 1 is associated with SN=1, data packet 2 is associated with SN=2, data packet 3 is associated with SN=3, ..., data packet 100 is associated with SN=100. After the source cell sends the data packets associated with SN=1-100 to the target cell, it may send SN=100 to the target cell. After the target cell receives SN=100, if the preset value is 1, the target cell may determine SN=101 as the second PDCP SN of the second data packet, that is, the target cell may start with SN=101 to number the data packets that are not associated with the PDCP SN received by the target cell, so that the target cell can send the data packet after association to the terminal device.

Specifically, if the length of the first HFN is 8 bits, it means that the maximum sequence number of the transmission of the first HFN is 255. In the case that the first HFN is 0, when the value of the first PDCP SN increases from 255 by 1, the first PDCP SN returns to zero, and the first HFN also increases by 1 to become 1.

Similarly, in the case that the first HFN is 1, when the value of the first PDCP SN increases from 255 by 1, the first PDCP SN returns to zero, and the first HFN also increases by 1 and becomes 2.

In the embodiment of the present application, assuming that at least one first HFN sent by the source cell to the target cell includes 0, and the maximum SN in the at least one first PDCP SN is 100, then after the target cell receives at least one first HFN and the first PDCP SN, the SN numbering may be performed on the first one data packet received by the target cell that is not associated with the first PDCP SN starting from 101.

Optionally, in some embodiments, the maximum PDCP SN is the maximum HFN in the corresponding at least one first HFN in the first data packet group, and is the maximum PDCP SN in the data packets associated with the first PDCP SN.

In the embodiment of the present application, it is assumed that the at least one first HFN sent by the source cell to the target cell includes 0, 1, and 2. In the case that the first HFN is 2, the maximum SN in the first PDCP SN is 100. That is, when the first HFN is 0, the at least one first PDCP SN may include 0-255; when the first HFN is 1, at least one first PDCP SN may include 0-255; and when the first HFN is 2, the at least one first PDCP SN may include 0-100.

Then the maximum PDCP SN corresponding to the maximum HFN in the first HFN in the embodiment of the present application is 100. After the target cell receives at least one first HFN and the first PDCP SN, it may number SN from 101 for the first one data packet received by the target cell that is not associated with the first PDCP SN.

In other words, if the length of the first HFN is 8 bits, for the source cell, the first PDCP SN forwarded to the target cell may be 0, 1, 2...255; 0, 1, 2,...255; 0, 1, 2, ... 100, it can be seen that although the maximum SN in the first PDCP SN is 255, in the embodiment of the present application, after the target cell receives at least one first HFN and at least one first PDCP SN, it can be determined that the maximum SN is the maximum SN corresponding to the condition in which the maximum HFN in at least one first HFN is 2, that is, SN=100, so that the first one data packet received from the target cell that is not associated with the first PDCP SN is numbered with SN from 101.

Optionally, in some embodiments, some data packets in the first data packet group are associated with SNs in the at least one PDCP SN.

In the embodiment of the present application, assuming that there are 100 data packets in the first data packet group, and the SNs included in at least one first PDCP SN are 1-50, the 50 data packets in the first data packet group may be associated with SNs (SN being 1-50) in at least first PDCP SN, that is, data packet 1 is associated with SN=1, data packet 2 is associated with SN=2, data packet 3 is associated with SN=3, ..., and data packet 50 is associated with SN=50. After the source cell sends the data packet associated with SN=1-50 to the target cell, it may send the data packet unassociated with SN to the target cell. At the same time, it may send SN=50 to the target cell. After the target cell receives SN=50, it may perform association on the first one data packet received by the target cell that is not associated with the PDCP SN starting from SN=51, so that the target cell may send the associated data packet to the terminal device.

As pointed out above, the data packets in the first data packet group may be associated with the SNs of at least one first PDCP SN, or part of the data packets in the first data packet group may be associated with the SNs of at least one first PDCP SN. For different situations, the source of the second data packet may be different, which will be described in detail below.

Optionally, in some embodiments, the second data packet is a data packet sent from a core network device and/or a data packet in the first data packet group that is not associated with SN in the at least one first PDCP SN..

In the embodiment of the present application, the second data packet received by the target cell may come from the core network device or the source cell. When the target cell receives these data packets not associated with SN, it may start SN numbering from the data packets sent by the source cell. After SN numbering the data packets sent by the source cell is completed, the data packets sent by the core network device may be started to be numbered.

For example, assuming that there are 100 data packets in the first data packet group, and the SNs of at least one first PDCP SN group are 1-50, then 50 data packets in the first data packet group may be associated with SNs of 1-50 in at least one first PDCP SN, and the remaining 50 data packets are not associated with SN in the at least one first PDCP SN. After the source cell sends the data packets associated with SN=1-50 to the target cell, it may send the data packet not associated with SN to the target cell. After receiving these data, the target cell may firstly number SN for the data packets not associated with SN sent by the source cell from 51 to 100. Then, the data packets sent by the core network device may be numbered with SN starting from 101, so that the target cell can send the data packets after association to the terminal device.

It is described above that the target cell determines the SN of the first received data packet that is not associated with the PDCP SN according to the largest PDCP SN in the data packet associated with the first PDCP SN in the first data packet group. The following will introduce that the target cell may determine the SN of the first received data packet not associated with the first PDCP SN according to the identification information.

Optionally, in some embodiments, when the second information is the identification information, the source cell sends the second information to the target cell, so that the target cell determines the second PDCP SN associated with the second data packet according to the second information, including: the source cell sending the identification information to the target cell, so that the target cell determines the sum of the PDCP SN associated with the last data packet before the identification information and the preset value as the second PDCP SN associated with the second data packet, where the identification information identifies that the source cell ends forwarding of data packets in the first data packet group.

The identification information in the embodiment of the present application may identify the source cell to end the forwarding of the data packet in the first data packet group. In other words, if the target cell receives the identification information sent by the source cell, it may know that the source cell has forwarded all the data packets associated with SNs. For subsequently received data packets, the received data packets that are not associated with SN may be numbered with SN according to the SN associated with the previous data packet before the received identification information.

The identification information in the embodiment of the present application may be an "end marker" or a special identifier, for example, it may be "#", which is not specifically limited in the present application.

Optionally, in some embodiments, the data packets in the first data packet group are all associated with SNs in the at least one first PDCP SN.

In the embodiment of the present application, assuming that there are 100 data packets in the first data packet group, and the SNs in at least one first PDCP SN is 1-100, then 100 data packets in the first data packet group may be associated with SNs of 1-100 in the at least one first PDCP SN. After the source cell sends the data packet associated with SN=1-100 to the target cell, it may send identification information to the target cell. After receiving the identification information, the target cell may determine the sum of the SN value of the data packet associated with the SN and received before the identification information and the preset value as the SN of the second data packet, that is, the target cell may use the sum of the SN value of the data packet associated with the SN and received before the identification information and the preset value as the SN of the first one data packet received by the target cell that is not associated with the SN, so that the target cell can send the associated data packet to the terminal device.

Optionally, in some embodiments, the second data packet is a data packet sent from a core network device.

In the embodiment of the present application, in the case that the data packets in the first data packet group are all associated with the SNs of the first PDCP SN, the second data packet may come from the core network device. Further, the target cell may perform SN numbering on the data packet sent from the core network device.

Optionally, in some embodiments, the first information does not include an SN domain of the at least one first PDCP SN, and the SN domain indicates the largest SN in the at least one first PDCP SN.

The SN domain of the at least one first PDCP SN in the embodiment of the present application may indicate the largest SN in the at least one first PDCP SN. In the embodiment of the present application, since the second information may indicate to the target cell the SN value of the first one data packet received by the target cell that is unassociated with SN, the first information sent by the source cell to the target cell may not include the SN domain of the at least one first PDCP SN.

In the embodiment of the present application, for example, a special symbol may be used to indicate that the SN domain of the at least one first PDCP SN is a useless value. In this way, when the source cell sends the first information to the target cell, it does not need to send the SN domain of the at least one first PDCP SN.

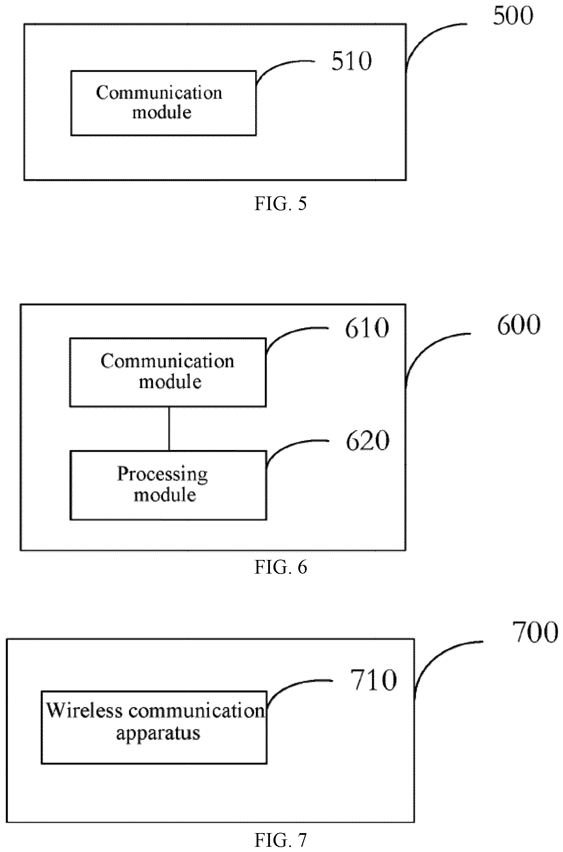

The method embodiments of the present application are described in detail above with reference to FIGs. 1 to 4, and the apparatus embodiments of the present application will be described below in conjunction with FIGs. 5-9. The apparatus embodiments are corresponding to the method embodiments, and thus the part not described in detail may be referred to the above method embodiments.

FIG. 5 is a wireless communication apparatus 500 provided by an embodiment of the present application. The wireless communication apparatus 500 may include a communication module 510.

The communication module 510 is configured to send first information to the target cell if a cell handover occurs in a terminal device. The first information includes at least one first packet data convergence protocol sequence number (PDCP SN) and a first data packet group. The first data packet group includes at least one first data packet.

The communication module 510 is further configured to send second information to the target cell, so that the target cell determines a second PDCP SN associated with a second data packet according to the second information, where the second data packet is a first one data packet received by the target cell that is not associated with the first PDCP SN.

Optionally, in some embodiments, the first information further includes: at least one first hyper frame number (HFN), and the at least one first HFN is used to encrypt and protect integrity of the at least one first data packet.

Optionally, in some embodiments, the first information and the second information are sent at different time points.

Optionally, in some embodiments, the communication module 510 is further configured to send the second information to the target cell when the terminal device is not disconnected from the source cell, so that the target cell determines the second PDCP SN associated with the second data packet according to the second information.

Optionally, in some embodiments, the second information includes one of the following information: indication signaling, a maximum PDCP SN in the data packet associated with the first PDCP SN in the first data packet group, identification information.

Optionally, in some embodiments, the maximum DPCP SN is a maximum HFN of at least one corresponding first HFN in the first data packet group, and is the maximum PDCP SN in the data packet associated with the first PDCP SN.

Optionally, in some embodiments, when the second information is the indication signaling, the communication module 510 is further configured to: send the indication signaling to the target cell, where the indication signaling includes an indication value, so that the target cell determines the indication value as the second PDCP SN associated with the second data packet.

Optionally, in some embodiments, the indication value is a sum of a PDCP SN of a data packet in the first data packet group that is previous to the first one data packet not associated with the SN in the at least one first PDCP SN and a preset value.

Optionally, in some embodiments, the communication module 510 is further configured to: if in the first data packet group sent by the source cell to the target cell is not lost, not send a second HFN to the target cell.

Optionally, in some embodiments, the communication module 510 is further configured to: if the first data packet group sent by the source cell to the target cell is lost, send the second HFN to the target cell..

Optionally, in some embodiments, in the case that the second information is the maximum PDCP SN among the data packets associated with the first PDCP SN in the first data packet group, the communication module 510 is further configured to: send the maximum PDCP SN in the data packet associated with the first PDCP SN in the first data packet group to the target cell, so that the target cell determines the sum of the maximum PDCP SN and the preset value to be the second PDCP SN associated with the second data packet.

Optionally, in some embodiments, some data packets in the first data packet group are associated with SNs in the at least one first PDCP SN.

Optionally, in some embodiments, the second data packet is a data packet sent from a core network device and/or a data packet in the first data packet group that is not associated with SN in the at least one first PDCP SN.

Optionally, in some embodiments, when the second information is the identification information, the communication module 510 is further configured to: send the identification information to the target cell, so that the target cell determines the sum of the PDCP SN associated with the last data packet before the identification information and a preset value as the second PDCP SN associated with the second data packet, where the identification information identifies that the source cell ends forwarding of the data packets in the first data packet group.

Optionally, in some embodiments, the data packets in the first data packet group are all associated with SNs in the at least one first PDCP SN.

Optionally, in some embodiments, the second data packet is a data packet sent from a core network device.

Optionally, in some embodiments, the preset value is 1.

Optionally, in some embodiments, the first information does not include an SN domain of the at least one first PDCP SN, and the SN domain indicates a maximum SN in the at least one first PDCP SN.

FIG. 6 is a wireless communication apparatus 600 provided by an embodiment of the present application. The apparatus 600 may include a communication module 610 and a processing module 620.

The communication module 610 is configured to receive first information sent by the source cell when the terminal device undergoes a cell handover, where the first information includes at least one first packet data convergence protocol sequence number (PDCP SN) and a first data packet group, and the first data packet group includes at least one first data packet.

The communication module 610 is further configured to receive second information sent by the source cell.

The processing module 620 is configured to determine a second PDCP SN associated with a second data packet according to the second information, where the second data packet is a first received data packet by the target cell that is not associated with the first PDCP SN.

Optionally, in some embodiments, the first information further includes: at least one first hyper frame number (HFN), and the at least one first HFN is used to encrypt and protect integrity of the at least one first data packet.

Optionally, in some embodiments, the first information and the second information are sent at different time points.

Optionally, in some embodiments, the second information includes one of the following information: indication signaling, a maximum PDCP SN in the data packet associated with the first PDCP SN in the first data packet group, and identification information.

Optionally, in some embodiments, the maximum DPCP SN is the maximum HFN corresponding to the at least one first HFN in the first data packet group, and is the maximum PDCP SN in the data packet associated with the first PDCP SN.

Optionally, in some embodiments, in a case where the second information is the indication signaling, the processing module 620 is further configured to: determine an indication value included in the indication signaling as the second PDCP SN associated with the second data packet.

Optionally, in some embodiments, the indication value is a sum of a PDCP SN of a data packet in the first data packet group that is previous to the first one data packet group not associated with SN in the at least one first PDCP SN and a preset value.

Optionally, in some embodiments, the communication module 610 is further configured to: receive a second HFN sent by the source cell when the first data packet group is lost.

Optionally, in some embodiments, in the case that the second information is the maximum PDCP SN among the data packets associated with the first PDCP SN in the first data packet group, the processing module 620 is further configured to determine the sum of the maximum PDCP SN and the preset value as the second PDCP SN associated with the second data packet.

Optionally, in some embodiments, some data packets in the first data packet group are associated with SNs in the at least one first PDCP SN.

Optionally, in some embodiments, the second data packet is a data packet sent from a core network device and/or a data packet in the first data packet group that is not associated with SN in the at least one first PDCP SN.

Optionally, in some embodiments, when the second information is the identification information, the processing module 620 is further configured to: associate a sum of the PDCP SN associated with the last data packet before the identification information and a preset value with the second data packet, wherein the identification information identifies that the source cell ends forwarding of the data packet in the first data packet group.

Optionally, in some embodiments, the data packets in the first data packet group are all associated with SNs in the at least one first PDCP SN.

Optionally, in some embodiments, the second data packet is a data packet sent from a core network device.

Optionally, in some embodiments, the preset value is 1.

Optionally, in some embodiments, the first information does not include an SN domain of the at least one first PDCP SN, and the SN domain indicates the maximum SN in the at least one first PDCP SN.

FIG. 7 is a network device 700 provided by an embodiment of the present application. The device 700 may include a wireless communication apparatus 710.

In the embodiment of the present application, the wireless communication apparatus 710 may be any of the aforementioned wireless communication apparatus 500 or 600.

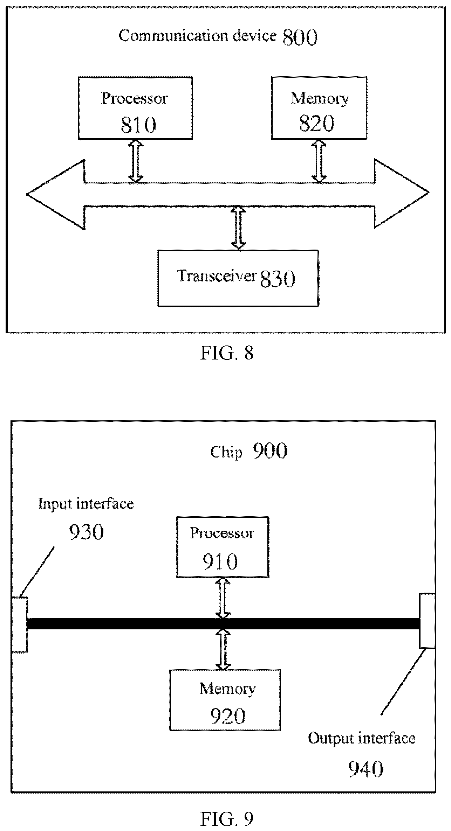

The embodiment of the present application also provides a communication device 800. As shown in FIG. 8, the communication device 800 includes a processor 810 and a memory 820, the memory is used to store a computer program, and the processor is used to call and run the computer program stored in the memory to execute the method in the embodiment of the present application.

The processor 810 may call and run a computer program from the memory 820 to implement the method in the embodiment of the present application.

The memory 820 may be a separate device independent of the processor 810, or may be integrated in the processor 810.

Optionally, as shown in FIG. 8, the communication device 800 may further include a transceiver 830, and the processor 810 may control the transceiver 830 to communicate with other devices. Specifically, it may send information or data to other devices, or receive information or data sent by other devices.

The transceiver 830 may include a transmitter and a receiver. The transceiver 830 may further include an antenna, and the number of antennas may be one or more.

Optionally, the communication device 800 may specifically be the network device of the embodiments of the present application, and the communication device 800 may implement the corresponding process implemented by the network device in each method of the embodiments of the present application, which will not be repeated here for the sake of brevity.

FIG. 9 is a schematic structural diagram of a chip of an embodiment of the present application. The chip 900 shown in FIG. 9 includes a processor 910, and the processor 910 may call and run a computer program from the memory to implement the method in the embodiments of the present application.

Optionally, as shown in FIG. 9, the chip 900 may further include a memory 920. The processor 910 may call and run a computer program from the memory 920 to implement the method in the embodiments of the present application.

The memory 920 may be a separate device independent of the processor 910, or may be integrated in the processor 910.

Optionally, the chip 900 may further include an input interface 930. The processor 910 may control the input interface 930 to communicate with other devices or chips, and specifically, may obtain information or data sent by other devices or chips.

Optionally, the chip 900 may further include an output interface 940. The processor 910 may control the output interface 940 to communicate with other devices or chips, and specifically, may output information or data to other devices or chips.

Optionally, the chip may be applied to the network device in the embodiments of the present application, and the chip may implement the corresponding process implemented by the network device in each method of the embodiments of the present application. For the sake of brevity, details are not described herein again.

It should be understood that the chip mentioned in the embodiments of the present application may also be referred to as a system-level chip, a system chip, a chip system, or a system-on-chip, etc.

It should be understood that the processor of the embodiments of the present application may be an integrated circuit chip with signal processing capability. In the implementation process, the steps of the foregoing method embodiments may be completed by hardware integrated logic circuits in the processor or instructions in the form of software. The aforementioned processor may be a general-purpose processor, a Digital Signal Processor (DSP), an Application Specific Integrated Circuit (ASIC), a Field Programmable Gate Array (FPGA) or other programming logic devices, discrete gates or transistor logic devices, discrete hardware components. The methods, steps, and logical block diagrams disclosed in the embodiments of the present application may be implemented or executed. The general-purpose processor may be a microprocessor or the processor may also be any conventional processor or the like. The steps of the method disclosed in the embodiments of the present application may be directly embodied as being executed and completed by a hardware decoding processor, or executed and completed by a combination of hardware and software modules in the decoding processor. The software module may be located in a mature storage medium in the field, such as a random access memory, a flash memory, a read-only memory, a programmable read-only memory, or an electrically erasable programmable memory, a register. The storage medium is located in the memory, and the processor reads the information in the memory and completes the steps of the above method in combination with its hardware.

It can be understood that the memory in the embodiments of the present application may be a volatile memory or a non-volatile memory, or may include both volatile and non-volatile memory. Among them, the non-volatile memory may be a Read-Only Memory (ROM), a Programmable ROM (PROM), an Erasable PROM (EPROM), and an Electrically EPROM (EEPROM) or a flash memory. The volatile memory may be a Random Access Memory (RAM), which is used as an external cache. By way of exemplary but not restrictive description, many forms of RAM are available, such as a Static RAM (SRAM), a Dynamic RAM (DRAM), a Synchronous DRAM (SDRAM), a Double Data Rate SDRAM (DDR SDRAM), an Enhanced SDRAM (ESDRAM), a Synchlink DRAM (SLDRAM) and a Direct Rambus RAM (DR RAM). It should be noted that the memories of the systems and methods described herein are intended to include, but are not limited to, these and any other suitable types of memories.

It should be understood that the foregoing memories are exemplary but not restrictive. For example, the memory in the embodiments of the present application may also be a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM) and a Direct Rambus RAM (DR RAM), etc. In other words, the memories in the embodiments of the present application are intended to include, but are not limited to, these and any other suitable types of memory.

The embodiments of the present application also provide a computer-readable storage medium for storing computer programs.

Optionally, the computer-readable storage medium may be applied to the network device in the embodiments of the present application, and the computer program causes the computer to execute the corresponding process implemented by the network device in each method of the embodiments of the present application, which are not repeated here for the sake of brevity.

The embodiments of the present application also provide a computer program product, including computer program instructions.

Optionally, the computer program product may be applied to the network device in the embodiments of the present application, and the computer program instructions cause the computer to execute the corresponding process implemented by the network device in each method of the embodiments of the present application, which are not repeated here for the sake of brevity
The embodiment of the present application also provides a computer program.

Optionally, the computer program may be applied to the network device in the embodiments of the present application. When the computer program runs on the computer, it causes the computer to execute the corresponding process implemented by the network device in each method of the embodiments of the present application, which are not repeated here for the sake of brevity.

A person of ordinary skill in the art may be aware that the units and algorithm steps of the examples described in combination with the embodiments disclosed herein may be implemented by electronic hardware or a combination of computer software and electronic hardware. Whether these functions are executed by hardware or software depends on the specific application and design constraint conditions of the technical solution. Professionals and technicians may use different methods for each specific application to implement the described functions, but such implementation should not be considered beyond the scope of the present application.

Those skilled in the art can clearly understand that, for the convenience and conciseness of description, the specific working process of the above-described system, device, and unit may refer to the corresponding process in the foregoing method embodiments, which are not elaborated here.

In the several embodiments provided in the present application, it should be understood that the disclosed system, apparatus, and method may be implemented in other ways. For example, the apparatus embodiments described above are only illustrative. For example, the division of the units is only a logical function division, and there may be other divisions in actual implementation, for example, a plurality of units or components may be combined or may be integrated into another system, or some features may be ignored or not implemented. In addition, the displayed or discussed mutual coupling or direct coupling or communication connection may be indirect coupling or communication connection through some interfaces, apparatuses or units, and may be in electrical, mechanical or other forms.

The units described as separate components may or may not be physically separated, and the components displayed as units may or may not be physical units, that is, they may be located in one place, or they may be distributed on a plurality of network units. Some or all of the units may be selected according to actual needs to achieve the objectives of the solutions of the embodiments.

In addition, the functional units in the various embodiments of the present application may be integrated into one processing unit, or each unit may exist alone physically, or two or more units may be integrated into one unit.

If the function is implemented in the form of a software functional unit and sold or used as an independent product, it may be stored in a computer readable storage medium. Based on this understanding, the technical solution of the present application essentially or the part that contributes to the related art or the part of the technical solution may be embodied in the form of a software product, and the computer software product is stored in a storage medium, which includes several instructions for enabling a computer device (which may be a personal computer, a server, or a network device, etc.) execute all or part of the steps of the methods described in the various embodiments of the present application. The aforementioned storage media include: a U disk, a mobile hard disk, a Read-Only Memory (ROM), a Random Access Memory (RAM), a magnetic disk or an optical disk and other media that can store program code.

The above contents are only specific implementations of the present application, and the protection scope of the present application is not limited thereto. Any person skilled in the art can easily think of changes or substitutions within the technical scope disclosed in the present application, which should be covered within the scope of protection of the present application. Therefore, the protection scope of the present application should be subject to the protection scope of the claims.

## Claims

1. A wireless communication method, comprising:
sending (410), by a source base station, first information to a target base station when a base station handover occurs in a terminal device, wherein the first information comprises at least one first packet data convergence protocol sequence number, PDCP SN, and a first data packet group, wherein the first data packet group comprises at least one first data packet; and
sending (430), by the source base station, second information to the target base station to enable the target base station to determine a second PDCP SN associated with a second data packet according to the second information, wherein the second data packet is a first data packet received by the target base station that is not associated with the at least one first PDCP SN,
wherein the first information and the second information are sent at different time points, wherein the first information further comprises at least one first hyper frame number, HFN, and the at least one first HFN is used by the target base station for encryption and integrity protection of the at least one first data packet

2. The method according to claim 1, wherein sending (430), by the source base station, the second information to the target base station to enable the target base station to determine the second PDCP SN associated with the second data packet according to the second information, comprises:
in a case that the terminal device is not disconnected from the source base station, sending, by the source base station, the second information to the target base station, to enable the target base station to determine the second PDCP SN associated with the second data packet according to the second information.

3. The method according to claim 1 or 2, wherein the second information comprises one of following information:
an indication signaling, a maximum PDCP SN in the data packet associated with the at least one first PDCP SN in the first data packet group, and identification information.

4. The method according to claim 3, wherein the maximum PDCP SN is a maximum PDCP SN of the at least one first PDCP SN corresponding to a maximum HFN of the at least one first HFN.

5. A wireless communication method, comprising:
receiving (420), by a target base station, first information sent by a source base station when a base station handover occurs in a terminal device, wherein the first information comprises at least one first packet data convergence protocol sequence number, PDCP SN, and a first data packet group, wherein the first data packet group comprises at least one first data packet;
receiving (440), by the target base station, second information sent by the source base station; and
determining (450), by the target base station, a second PDCP SN associated with a second data packet according to the second information, wherein the second data packet is a first data packet received by the target base station that is not associated with the at least one first PDCP SN.
wherein the first information and the second information are sent at different time points,
wherein the first information further comprises at least one first hyper frame number, HFN, sent by the source base station, and the at least one first HFN is used by the target base station for encryption and integrity protection of the at least one first data packet.

6. A source base station, comprising:
a processor and a memory, wherein the memory is configured to store a computer program, and the processor is configured to call and run the computer program stored in the memory, and execute:
sending first information to a target base station when a base station handover occurs in a terminal device, wherein the first information comprises at least one first packet data convergence protocol sequence number, PDCP SN, and a first data packet group, wherein the first data packet group comprises at least one first data packet; and
sending second information to the target base station to enable the target base station to determine a second PDCP SN associated with a second data packet according to the second information, wherein the second data packet is a first data packet received by the target base station that is not associated with the at least one first PDCP SN,
wherein the first information and the second information are sent at different time points,
wherein the first information further comprises at least one first hyper frame number, HFN, to the target base station, and the at least one first HFN is used by the target base station for encryption and integrity protection of the at least one first data packet.

7. A target base station, comprising:
a processor and a memory, wherein the memory is configured to store a computer program, and the processor is configured to call and run the computer program stored in the memory, and execute:
receiving first information sent by a source base station when a base station handover occurs in a terminal device, wherein the first information comprises at least one first packet data convergence protocol sequence number, PDCP SN, and a first data packet group, wherein the first data packet group comprises at least one first data packet;
receiving second information sent by the source base station; and
determining a second PDCP SN associated with a second data packet according to the second information, wherein the second data packet is a first data packet received by the target base station that is not associated with the at least one first PDCP SN,
wherein the first information and the second information are sent at different time points,
wherein the first information further comprises at least one first hyper frame number, HFN, sent by the source base station, and the at least one first HFN is used by the target base station for encryption and integrity protection of the at least one first data packet.

## Patentansprüche

1. Drahtloskommunikationsverfahren, umfassend:
Senden (410), durch eine erste Quell-Basisstation, erster Informationen an eine Ziel-Basisstation, wenn eine Basisstationsübergabe in einer Endgerätevorrichtung erfolgt, wobei die ersten Informationen wenigstens eine erste Paketdaten-Konvergenzprotokoll-Sequenznummer (Packet Data Convergence Protocol Sequence Number, PDCP SN) und eine erste Datenpaketgruppe umfassen, wobei die erste Datenpaketgruppe wenigstens ein erstes Datenpaket umfasst; und
Senden (430), durch die Quell-Basisstation, zweiter Informationen an die Ziel-Basisstation, um die Ziel-Basisstation zu befähigen, eine zweite PDCP SN, die mit einem zweiten Datenpaket verknüpft ist, gemäß den zweiten Informationen zu bestimmen, wobei das zweite Datenpaket ein erstes Datenpaket ist, das durch die Ziel-Basisstation empfangen wird, die nicht mit der wenigstens einen ersten PDCP SN verknüpft ist:
wobei die ersten Informationen und die zweiten Informationen zu unterschiedlichen Zeitpunkten gesendet werden, wobei die ersten Informationen ferner wenigstens eine erste Hyperrahmennummer (Hyper Frame Number, HFN) umfassen und die wenigstens eine erste HFN von der Ziel-Basisstation zur Verschlüsselung und zum Schutz der Integrität des wenigstens einen ersten Datenpakets verwendet wird.

2. Verfahren gemäß Anspruch 1, wobei das Senden (430), durch die Quell-Basisstation, der zweiten Informationen an die Ziel-Basisstation, um die Ziel-Basisstation zu befähigen, die zweite PDCP SN, die mit dem zweiten Datenpaket verknüpft ist, gemäß den zweiten Informationen zu bestimmen, umfasst:
In einem Fall, in dem die Endgerätevorrichtung nicht von der Quell-Basisstation getrennt ist, Senden, durch die Quell-Basisstation, der zweiten Informationen an die Ziel-Basisstation, um die Ziel-Basisstation zu befähigen, die zweite PDCP SN, die mit dem zweiten Datenpaket verknüpft ist, gemäß den zweiten Informationen zu bestimmen.

3. Verfahren gemäß Anspruch 1 oder 2, wobei die zweiten Informationen eine der folgenden Informationen umfasst:
eine Anzeigesignalisierung, eine maximale PDCP SN in dem Datenpaket, das mit der wenigstens einen ersten PDCP SN in der ersten Datenpaketgruppe verknüpft ist, und Identifikationsinformationen.

4. Verfahren gemäß Anspruch 3, wobei die maximale PDCP SN eine maximale PDCP SN der wenigstens einen ersten PDCP SN ist, die einer maximalen HFN der wenigstens einen ersten HFN entspricht.

5. Drahtloskommunikationsverfahren, umfassend:
Empfangen (420), durch eine Ziel-Basisstation, erster Informationen, die von einer Quell-Basisstation gesendet werden, wenn eine Basisstationsübergabe in einer Endgerätevorrichtung erfolgt, wobei die ersten Informationen wenigstens eine erste Paketdaten-Konvergenzprotokoll-Sequenznummer (Packet Data Convergence Protocol Sequence Number, PDCP SN) und eine erste Datenpaketgruppe umfassen, wobei die erste Datenpaketgruppe wenigstens ein erstes Datenpaket umfasst;
Empfangen (440), durch die Ziel-Basisstation, zweiter Informationen, die von der Quell-Basisstation gesendet werden; und
Bestimmen (450), durch die Ziel-Basisstation, einer zweiten PDCP SN, die mit einem zweiten Datenpaket verknüpft ist, gemäß den zweiten Informationen, wobei das zweite Datenpaket ein erstes Datenpaket ist, das durch die Ziel-Basisstation empfangen wird, die nicht mit der wenigsten einen ersten PDCP SN verknüpft ist;
wobei die ersten Informationen und die zweiten Informationen zu unterschiedlichen Zeitpunkten gesendet werden, wobei die ersten Informationen ferner wenigstens eine erste Hyperrahmennummer (Hyper Frame Number, HFN) umfassen, die von der Quell-Basisstation gesendet wird, und die wenigstens eine erste HFN von der Ziel-Basisstation zur Verschlüsselung und zum Schutz der Integrität des wenigstens einen ersten Datenpakets verwendet wird.

6. Quell-Basisstation, umfassend:
einen Prozessor und einen Speicher, wobei der Speicher dafür ausgelegt ist, ein Computerprogramm zu speichern, und der Prozessor dafür ausgelegt ist, das im Speicher gespeicherte Computerprogramm aufzurufen und zu starten und dies auszuführen:
Senden erster Informationen an eine Ziel-Basisstation, wenn eine Basisstationsübergabe in einer Endgerätevorrichtung erfolgt, wobei die ersten Informationen wenigstens eine erste Paketdaten-Konvergenzprotokoll-Sequenznummer (Packet Data Convergence Protocol Sequence Number, PDCP SN) und eine erste Datenpaketgruppe umfassen, wobei die erste Datenpaketgruppe wenigstens ein erstes Datenpaket umfasst; und
Senden zweiter Informationen an die Ziel-Basisstation, um die Ziel-Basisstation zu befähigen, eine zweite PDCP SN, die mit einem zweiten Datenpaket verknüpft ist, gemäß den zweiten Informationen zu bestimmen, wobei das zweite Datenpaket ein erstes Datenpaket ist, das durch die Ziel-Basisstation empfangen wird, die nicht mit der wenigstens einen ersten PDCP SN verknüpft ist,
wobei die ersten Informationen und die zweiten Informationen zu unterschiedlichen Zeitpunkten gesendet werden,
wobei die ersten Informationen ferner wenigstens eine erste Hyperrahmennummer (Hyper Frame Number, HFN) für die Ziel-Basisstation umfassen und die wenigstens eine erste HFN von der Ziel-Basisstation zur Verschlüsselung und zum Schutz der Integrität des wenigstens einen ersten Datenpakets verwendet wird.

7. Ziel-Basisstation, umfassend:
einen Prozessor und einen Speicher, wobei der Speicher dafür ausgelegt ist, ein Computerprogramm zu speichern, und der Prozessor dafür ausgelegt ist, das im Speicher gespeicherte Computerprogramm aufzurufen und zu starten und dies auszuführen:
Empfangen erster Informationen, die von einer Quell-Basisstation gesendet werden, wenn eine Basisstationsübergabe in einer Endgerätevorrichtung erfolgt, wobei die ersten Informationen wenigstens eine erste Paketdaten-Konvergenzprotokoll-Sequenznummer (Packet Data Convergence Protocol Sequence Number, PDCP SN) und eine erste Datenpaketgruppe umfassen, wobei die erste Datenpaketgruppe wenigstens ein erstes Datenpaket umfasst;
Empfangen zweiter Informationen, die von der Quell-Basisstation gesendet werden; und
Bestimmen, gemäß den zweiten Informationen, einer zweiten PDCP SN, die mit einem zweiten Datenpaket verknüpft ist, wobei das zweite Datenpaket ein erstes Datenpaket ist, das durch die Ziel-Basisstation empfangen wird, die nicht mit der wenigstens einen ersten PDCP SN verknüpft ist,
wobei die ersten Informationen und die zweiten Informationen zu unterschiedlichen Zeitpunkten gesendet werden,
wobei die ersten Informationen ferner wenigstens eine erste Hyperrahmennummer (Hyper Frame Number, HFN) umfassen, die von der Quell-Basisstation gesendet wird, und die wenigstens eine erste HFN von der Ziel-Basisstation zur Verschlüsselung und zum Schutz der Integrität des wenigstens einen ersten Datenpakets verwendet wird.

## Revendications

1. Procédé de communication sans fil, comprenant :
l'envoi (410), par une station de base source, de premières informations vers une station de base cible lorsqu'un transfert de station de base a lieu dans un dispositif terminal, dans lequel les premières informations comprennent au moins un premier numéro de séquence de protocole de convergence des données par paquets, SN PDCP, et un premier groupe de paquets de données, dans lequel le premier groupe de paquets de données comprend au moins un premier paquet de données ; et
l'envoi (430), par la station de base source, de secondes informations à la station de base cible pour permettre que la station de base cible détermine un second SN PDCP associé à un second paquet de données en fonction des secondes informations, dans lequel le second paquet de données est un premier paquet de données reçu par la station de base cible qui n'est pas associé à l'au moins un premier SN PDCP,
dans lequel les premières informations et les secondes informations sont envoyées à des instants différents, dans lequel les premières informations comprennent en outre au moins un premier numéro d'hypertrame, HFN, et l'au moins un premier HFN est utilisé par la station de base cible pour le chiffrement et la protection de l'intégrité de l'au moins un premier paquet de données.

2. Procédé selon la revendication 1, dans lequel l'envoi (430), par la station de base source, des secondes informations à la station de base cible pour permettre que la station de base cible détermine le second SN PDCP associé au second paquet de données en fonction des secondes informations, comprend :
dans le cas où le dispositif terminal n'est pas déconnecté de la station de base source, l'envoi, par la station de base source, des secondes informations à la station de base cible, pour permettre que la station de base cible détermine le second SN PDCP associé au second paquet de données en fonction des secondes informations.

3. Procédé selon la revendication 1 ou 2, dans lequel les secondes informations comprennent une des informations suivantes :
une signalisation d'indication, un SN PDCP maximal dans le paquet de données associé à l'au moins un premier SN PDCP dans le premier groupe de paquets de données, et des informations d'identification.

4. Procédé selon la revendication 3, dans lequel le SN PDCP maximal est un SN PDCP maximal de l'au moins un premier SN PDCP correspondant à un HFN maximal de l'au moins un premier HFN.

5. Procédé de communication sans fil, comprenant :
la réception (420), par une station de base cible, de premières informations envoyées par une station de base source lorsqu'un transfert de station de base a lieu dans un dispositif terminal, dans lequel les premières informations comprennent au moins un premier numéro de séquence de protocole de convergence des données par paquets, SN PDCP, et un premier groupe de paquets de données, dans lequel le premier groupe de paquets de données comprend au moins un premier paquet de données ;
la réception (440), par la station de base cible, de secondes informations envoyées par la station de base source ; et
la détermination (450), par la station de base cible, d'un second SN PDCP associé à un second paquet de données en fonction des secondes informations, dans lequel le second paquet de données est un premier paquet de données reçu par la station de base cible qui n'est pas associé à l'au moins un premier SN PDCP,
dans lequel les premières informations et les secondes informations sont envoyées à des instants différents,
dans lequel les premières informations comprennent en outre au moins un premier numéro d'hypertrame, HFN, envoyé par la station de base source, et l'au moins un premier HFN est utilisé par la station de base cible pour le chiffrement et la protection de l'intégrité de l'au moins un premier paquet de données.

6. Station de base source, comprenant :
un processeur et une mémoire, dans lequel la mémoire est configurée pour stocker un programme informatique, et le processeur est configuré pour appeler et faire fonctionner le programme informatique stocké dans la mémoire, et exécuter :
l'envoi de premières informations à une station de base cible lorsqu'un transfert de station de base a lieu dans un dispositif terminal, dans lequel les premières informations comprennent au moins un premier numéro de séquence de protocole de convergence des données par paquets, SN PDCP, et un premier groupe de paquets de données, dans lequel le premier groupe de paquets de données comprend au moins un premier paquet de données ; et
l'envoi de secondes informations à la station de base cible pour permettre que la station de base cible détermine un second SN PDCP associé à un second paquet de données en fonction des secondes informations, dans lequel le second paquet de données est un premier paquet de données reçu par la station de base cible qui n'est pas associé à l'au moins un premier SN PDCP,
dans lequel les premières informations et les secondes informations sont envoyées à des instants différents,
dans lequel les premières informations comprennent en outre au moins un premier numéro d'hypertrame, HFN, vers la station de base cible, et l'au moins un premier HFN est utilisé par la station de base cible pour le chiffrement et la protection de l'intégrité de l'au moins un premier paquet de données.

7. Station de base cible, comprenant :
un processeur et une mémoire, dans lequel la mémoire est configurée pour stocker un programme informatique, et le processeur est configuré pour appeler et faire fonctionner le programme informatique stocké dans la mémoire, et exécuter :
la réception de premières informations envoyées par une station de base source lorsqu'un transfert de station de base a lieu dans un dispositif terminal, dans lequel les premières informations comprennent au moins un premier numéro de séquence de protocole de convergence des données par paquets, SN PDCP, et un premier groupe de paquets de données, dans lequel le premier groupe de paquets de données comprend au moins un premier paquet de données ;
la réception de secondes informations envoyées par la station de base source ; et
la détermination d'un second SN PDCP associé à un second paquet de données en fonction des secondes informations, dans lequel le second paquet de données est un premier paquet de données reçu par la station de base cible qui n'est pas associé à l'au moins un premier SN PDCP,
dans lequel les premières informations et les secondes informations sont envoyées à des instants différents,
dans lequel les premières informations comprennent en outre au moins un premier numéro d'hypertrame, HFN, envoyé par la station de base source, et l'au moins un premier HFN est utilisé par la station de base cible pour le chiffrement et la protection de l'intégrité de l'au moins un premier paquet de données.
